# EUROPÄISCHE PATENTANMELDUNG

(11) **EP 0 895 920 A1**
(43) Veröffentlichungstag der Anmeldung: **10.02.1999**
(21) Anmeldenummer: 98104634.5
(22) Anmeldetag: 14.03.1998
(51) Int. Cl.: B62B 3/14

(54) **Hinweistafel zur lösbaren Anbringung insbesondere an der Griffstange von Einkaufswagen**

(30) Priorität: 06.08.1997 DE 29714013 U
(71) Anmelder: Oechsle Kunststofftechnik GmbH, 89340 Leipheim (DE)
(72) Erfinder: Frana, Alfred, 89547 Gerstetten (DE)
(74) Vertreter: Dziewior, Joachim, Dipl.-Phys. Dr.

(57) **Zusammenfassung**

Die Hinweistafel ist vorgesehen zur lösbaren Anbringung an Einkaufswagen. Sie besteht aus einem Profilteil (1), dessen stirnseitigen Enden durch Abschlußstücke (2) geschlossen sind. Das Profilteil (1) ist an seiner bei bestimmungsgemäßer Montage oberen Seite mit einem Aufnahmeteil (3) für ein Plakat (4) oder dergleichen sowie an seiner Unterseite mit einem Anschlußteil (5) zur Befestigung an der Griffstange (6) des Einkaufswagens versehen.

## Beschreibung

Hinweistafel zur lösbaren Anbringung insbesondere an der Griffstange von Einkaufswagen.

Die Erfindung betrifft eine Hinweistafel zur lösbaren Anbringung insbesondere an der Griffstange von Einkaufswagen.

Derartige Hinweistafeln können beispielsweise Werbezwecken dienen; es besteht jedoch auch die Möglichkeit, die Hinweistafeln mit Informationen für den Kunden zu versehen, beispielsweise also als Wegweiser in großen Märkten einzusetzen.

Der Erfindung liegt die Aufgabe zugrunde, eine derartige Hinweistafel zu schaffen, die einfach an der Griffstange des Einkaufswagens angeschlossen werden kann, so daß auch ein einfaches Nachrüsten vor Ort möglich ist.

Diese Aufgabe wird bei einer Hinweistafel der eingangs genannten Art gelöst durch ein Profilteil, dessen stirnseitige Enden durch Abschlußstücke geschlossen sind und das an seiner bei bestimmungsgemäßer Montage oberen Seite mit einem Aufnahmeteil für ein Plakat oder dergleichen sowie an seiner Unterseite mit einem Anschlußteil zur Befestigung an der Griffstange versehen ist.

Der durch die Erfindung erreichte Vorteil besteht im wesentlichen darin, daß sich die Hinweistafel durch das Anschlußteil einfach an der Griffstange des Einkaufswagens befestigen läßt, wodurch es im übrigen sich unmittelbar im Blickbereich des den Einkaufswagen schiebenden Kunden befindet.

In einer ersten Ausführungsform kann das Anschlußteil von einer der Querschnittsgestalt der Griffstange angepaßten Aufnahmemulde im Profilteil gebildet sein. Die Hinweistafel wird dann beispielsweise mit Schrauben von unten her durch die Griffstange hindurch festgeschraubt.

In demgegenüber bevorzugter Ausführungsform der Erfindung ist jedoch das Anschlußteil von einer der Querschnittsgestalt der Griffstange angepaßten Aufnahmemulde im Profilteil sowie einem am Profilteil festlegbaren, dabei die Griffstange umschließenden Klemmprofil gebildet. Insbesondere bei einem unrunden Querschnitt der Griffstange ist dabei darüber hinaus sichergestellt, daß die Hinweistafel drehfest und in vorbestimmter Ausrichtung an der Griffstange anschließbar ist. Weiter ist es hierbei von Vorteil, wenn der eine Längsrand der Aufnahmemulde eine Nut aufweist, in die das Klemmprofil mit einer Randleiste eingreift, während der gegenüber liegende Rand des Klemmprofils mit wenigstens einer Schraube am Profilteil befestigt ist. Zweckmäßigerweise ist hierbei die Schraube zu ihrer Fixierung in eine Vierkantmutter eindrehbar, die in eine hinterschnittene Nut am Profilteil eingeschoben ist.

Das Aufnahmeteil ist vorteilhafterweise von einer Anlagefläche für das Plakat und von randseitig die Anlagefläche mit dem Plakat übergreifenden Halteleisten gebildet. Auf diese Weise ist sichergestellt, daß das Plakat randseitig übergriffen und somit keinen Beschädigungen ausgesetzt ist.

Weiter ist im Rahmen der Erfindung vorgesehen, daß das Profilteil innenseitig wenigstens einen als Nutsteg ausgebildeten Schraubkanal zur Befestigung der Abschlußstücke aufweist. Die Abschlußstücke sind zweckmäßigerweise mit Wasserablauföffnungen bildenden Ausnehmungen versehen, so daß zwischen den Abschlußstücken und dem Profilteil eindringendes Wasser sich im Inneren der Hinweistafel nicht stauen kann.

Vorteilhafterweise ist das Profilteil aus Aluminium ausgebildet und bestehen die Abschlußstücke aus Kunststoff. Auf diese Weise ist ein robuster Aufbau gegeben, der die Anwendung auch für Baumärkte geeignet macht. Außerdem ist dadurch eine hinreichende Witterungsbeständigkeit gegeben.

Es besteht jedoch auch die Möglichkeit, daß das Profilteil einstückig mit den Abschlußstücken als Kunststoffteil ausgebildet ist. Zur Erhöhung der Stabilität und Formsteifigkeit ist es dann von Vorteil, wenn das Profilteil an seiner Innenseite mit quer und/oder längs verlaufenden Versteifungsrippen versehen ist. Im übrigen kann das Klemmprofil als sich über die gesamte Länge des Profilteils erstreckende Leiste oder in Form von wenigstens zwei schmalen Stegen ausgebildet sein.

Schließlich kann im Rahmen der Erfindung noch vorgesehen sein, daß im Profilteil ein Pfandschloß integriert ist. Auf diese Weise erübrigt es sich, die mittlerweile an Einkaufswagen üblichen Pfandschlösser getrennt zu montieren.

Im folgenden wird die Erfindung an einem in der Zeichnung dargestellten Ausführungsbeispiel näher erläutert; es zeigen:

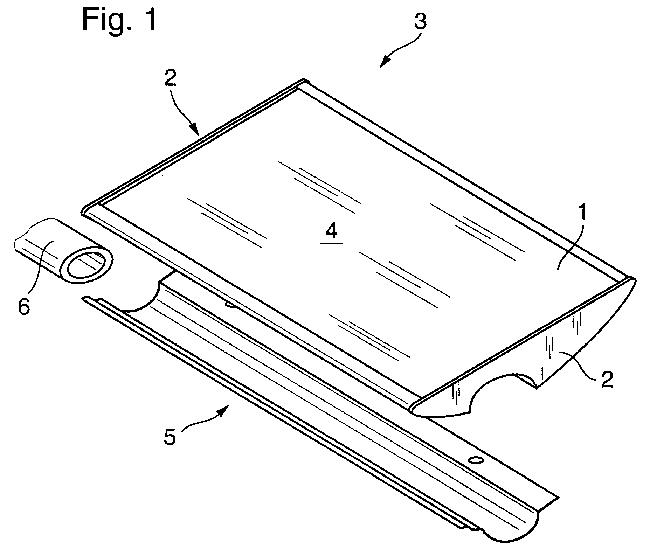

- Fig. 1: eine perspektivische Darstellung der Hinweistafel,
- Fig. 2: einen Schnitt durch den Gegenstand nach Fig. 1,
- Fig. 3: den Gegenstand nach Fig. 2 mit gelöstem Klemmprofil,
- Fig. 4: das Abschlußstück in Draufsicht sowie in Stirnansicht.
- Fig. 5: eine alternative Ausführungsform der Hinweistafel in perspektivischer Ansicht nach unten,
- Fig. 6: den Gegenstand nach Fig. 5 mit zwei alternativen Gestaltungen des Klemmprofils.

Die in der Zeichnung dargestellte Hinweistafel ist zur lösbaren Anbringung an Einkaufswagen vorgesehen und dient beispielsweise zu Zwecken der Werbung. Die Hinweistafel kann jedoch auch spezielle Kundeninformationen aufnehmen, z. B. einen Wegweiser in großen Einkaufsmärkten enthalten.

Die Hinweistafel besteht zunächst aus einem Profilteil 1, dessen stirnseitige Enden durch Abschlußstücke 2 geschlossen sind. Bei bestimmungsgemäßer Montage der Hinweistafel ist das Profilteil 1 an seiner oberen Seite mit einem Aufnahmeteil 3 für ein Plakat 4 oder dergleichen sowie an seiner Unterseite mit einem Anschlußteil 5 zur Befestigung an der - nur angedeuteten - Griffstange 6 des Einkaufswagens versehen. Das Anschlußteil 5 besteht im einzelnen aus einer Aufnahmemulde 7 im Profilteil 1 sowie einem Klemmprofil 8, das am Profilteil festlegbar ist und dabei die Griffstange 6 umschließt. Die Aufnahmemulde 7 sowie das Klemmprofil 8 sind dabei an die Querschnittsgestalt der Griffstange 6 angepaßt. Im Ausführungsbeispiel ist das Anschlußteil 5 für eine im wesentlichen ovale bzw. nierenförmige Griffstange 6 ausgebildet. Es besteht jedoch auch die in der Zeichnung nicht dargestellte Möglichkeit, auf das Klemmprofil 8 zu verzichten und die Hinweistafel von unten mittels sich durch die Griffstange 6 erstreckender Schrauben zu befestigen.

Der eine Längsrand der Aufnahmemulde 7 weist eine Nut 9 auf, in die das Klemmprofil 8 mit einer Randleiste 10 eingreift. Der gegenüber liegende Rand des Klemmprofils 8 ist mit einer oder mehreren Schrauben 11 am Profilteil 1 befestigt. Dazu ist am Profilteil 1 eine hinterschnittene Nut 12 vorgesehen, in die eine Vierkantmutter 13 eingeschoben ist, die der Fixierung der Schraube 11 dient.

Das Aufnahmeteil 3 ist von einer im Ausführungsbeispiel ebenen Anlagefläche für das Plakat 4 gebildet, wobei randseitig Halteleisten 14 vorgesehen sind, die die Anlagefläche mit dem Plakat 4 übergreifen. Auf diese Weise ist das Plakat 4, das zweckmäßigerweise bei abgenommenem Abschlußstück 2 von der Seite her eingeschoben wird, randseitig geschützt. Das Plakat 4 kann dabei zusätzlich von einer darüber angeordneten Schutzfolie abgedeckt sein.

Zur Befestigung der Abschlußstücke 2 an der Stirnseite des Profilteils 1 ist dieses innenseitig mit drei Schraubkanälen 15 versehen, die als Nutsteg ausgebildet sind. In diese Schraubkanäle 15 lassen sich von außen her beispielsweise selbstschneidende Schrauben eindrehen.

Die Abschlußstücke 2 sind mit zwei Ausnehmungen 16 versehen, die Wasserablauföffnungen bilden, wobei die eine, zum Rand hin offene Ausnehmung 16 ins Innere des Profilteils 1 eingedrungenes Wasser ableitet, während die andere Ausnehmung 16 das sich auf dem Plakat 4 bzw. der Schutzfolie sammelnde Wasser ableitet.

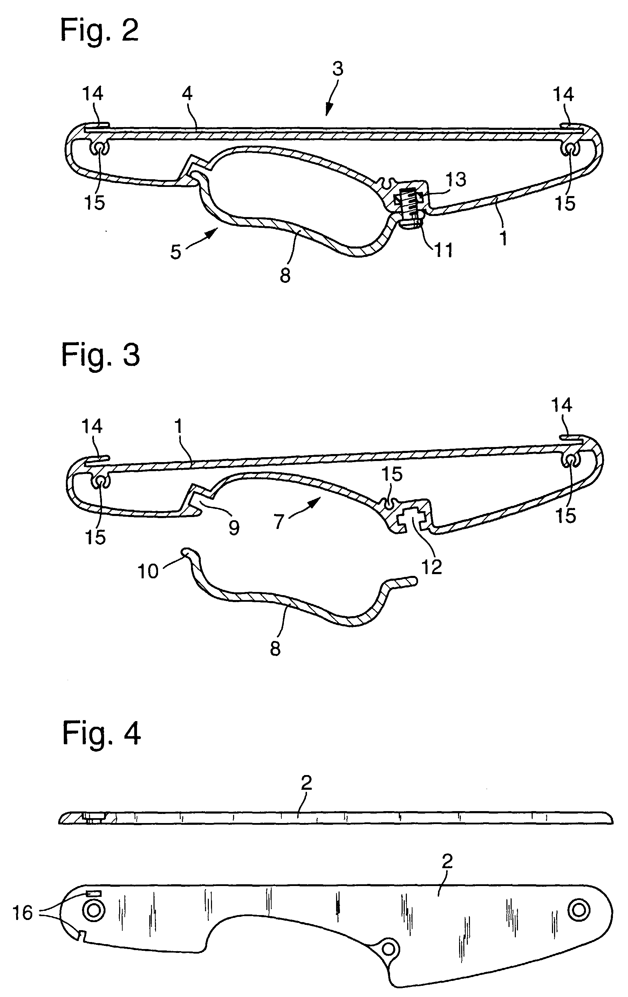

Das Profilteil 1 ist, wie in den Fig. 2 und 3 zu sehen, als Hohlprofil ausgebildet und besteht zweckmäßigerweise aus Aluminium, während die Abschlußstücke 2 aus Kunststoff gefertigt sein können. Hierdurch ist ein sowohl robuster wie auch witterungsbeständiger Aufbau gegeben, so daß der Einsatz auch bei Baumärkten möglich ist. Das Profilteil 1 ist allseitig verrundet, wodurch die Gefahr von Verletzungen ausgeschlossen ist.

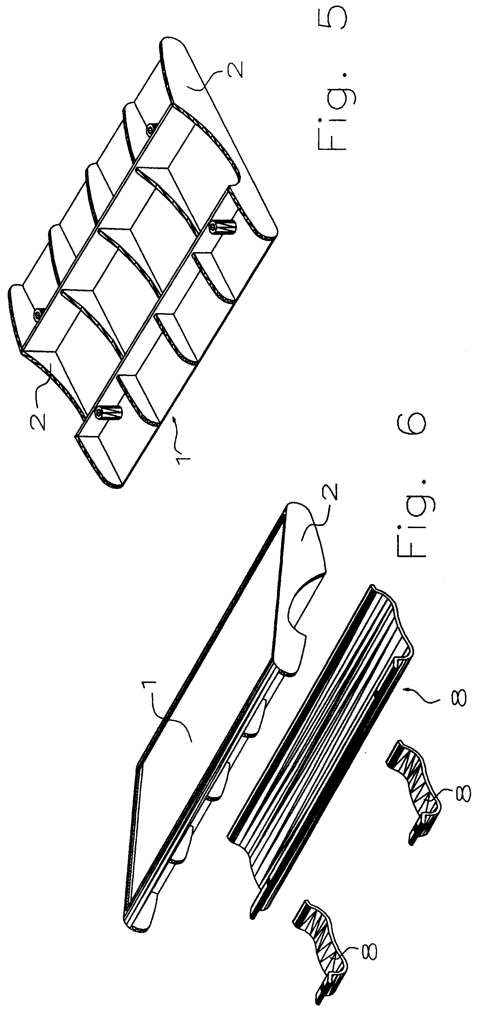

In den Fig. 5 und 6 ist eine weitere Ausführungsform gezeigt, bei der das Profilteil 1 einstückig mit den Abschlußstücken 2 als Kunststoffteil ausgebildet ist. Um eine ausreichende Stabilität und Formsteifigkeit zu erreichen, ist das Profilteil 1 an seiner Innenseite mit quer längs verlaufenden Versteifungsrippen versehen.

Wie aus Fig. 6 zu sehen ist, kann das Klemmprofil 8 als sich über die gesamte Länge des Profilteils 1 erstreckende Leiste oder in Form von wenigstens zwei schmalen Stegen ausgebildet sein, wobei die Auswahl entsprechend der auftretenden mechanischen Belastsungen zu treffen ist.

Schließlich besteht noch die in der Zeichnung nicht näher dargestellte Möglichkeit, im bzw. am Profilteil 1 ein Pfandschloß zu integrieren, über das mehrere Einkaufswägen aneinander geschlossen werden. Derartige Pfandschlösser sind heutzutage bei Einkaufswagen gebräuchlich und müßten in diesem Fall nicht gesondert am Einkaufswagen montiert werden.

## Patentansprüche

1. Hinweistafel zur lösbaren Anbringung an Einkaufswagen, gekennzeichnet durch ein Profilteil (1), dessen stirnseitigen Enden durch Abschlußstücke (2) geschlossen sind und das an seiner bei bestimmungsgemäßer Montage oberen Seite mit einem Aufnahmeteil (3) für ein Plakat (4) oder dergleichen sowie an seiner Unterseite mit einem Anschlußteil (5) zur Befestigung an der Griffstange (6) des Einkaufswagens versehen ist.

2. Hinweistafel nach Anspruch 1, dadurch gekennzeichnet, daß das Anschlußteil (5) von einer der Querschnittsgestalt der Griffstange (6) angepaßten Aufnahmemulde (7) im Profilteil (1) gebildet ist.

3. Hinweistafel nach Anspruch 1, dadurch gekennzeichnet, daß das Anschlußteil (5) von einer der Querschnittsgestalt der Griffstange (6) angepaßten Aufnahmemulde (7) im Profilteil (1) sowie einem am Profilteil (1) festlegbaren, dabei die Griffstange (6) umschließenden Klemmprofil (8) gebildet ist.

4. Hinweistafel nach Anspruch 3, dadurch gekennzeichnet, daß der eine Längsrand der Aufnahmemulde (7) eine Nut (9) aufweist, in die das Klemmprofil (8) mit einer Randleiste (10) eingreift, während der gegenüberliegende Rand des Klemmprofils (8) mit wenigstens einer Schraube (11) am Profilteil (1) befestigt ist.

5. Hinweistafel nach Anspruch 3 oder 4, dadurch gekennzeichnet, daß die Schraube (11) zu ihrer Fixierung in eine Vierkantmutter (13) eindrehbar ist, die in eine hinterschnittene Nut (12) am Profilteil (1) eingeschoben ist.

6. Hinweistafel nach einem der Ansprüche 1 bis 5, dadurch gekennzeichnet, daß das Aufnahmeteil (3) von einer Anlagefläche für das Plakat (4) und von randseitig die Anlagefläche mit dem Plakat (4) übergreifenden Halteleisten (14) gebildet ist.

7. Hinweistafel nach einem der Ansprüche 1 bis 6, dadurch gekennzeichnet, daß das Profilteil (1) innenseitig wenigstens einen als Nutsteg ausgebildeten Schraubkanal (15) zur Befestigung der Abschlußstücke (2) aufweist.

8. Hinweistafel nach einem der Ansprüche 1 bis 7, dadurch gekennzeichnet, daß die Abschlußstücke (2) mit Wasserablauföffnungen bildenden Ausnehmungen (16) versehen sind.

9. Hinweistafel nach einem der Ansprüche 1 bis 8, dadurch gekennzeichnet, daß das Profilteil (1) als Hohlprofil aus Aluminium ausgebildet ist und die Abschlußstücke (2) aus Kunststoff bestehen.

10. Hinweistafel nach einem der Ansprüche 1 bis 9, dadurch gekennzeichnet, daß das Profilteil (1) einstückig mit den Abschlußstücken (2) als Kunststoffteil ausgebildet ist.

11. Hinweistafel nach Anspruch 10, dadurch gekennzeichnet, daß das Profilteil (1) an seiner Innenseite mit quer und/oder längs verlaufenden Versteifungsrippen versehen ist.

12. Hinweistafel nach einem der Ansprüche 1 bis 11, dadurch gekennzeichnet, daß das Klemmprofil (8) als sich über die gesamte Länge des Profilteils (1) erstreckende Leiste oder in Form von wenigstens zwei schmalen Stegen ausgebildet ist.

13. Hinweistafel nach einem der Ansprüche 1 bis 12, dadurch gekennzeichnet, daß im Profilteil (1) ein Pfandschloß integriert ist.
